(19) Europäisches Patentamt
European Patent Office
Office européen des brevets

(11) **EP 3 023 863 A1**

(12) **EUROPEAN PATENT APPLICATION**

(43) Date of publication:
**25.05.2016 Bulletin 2016/21**

(51) Int Cl.:
*G06F 3/01* (2006.01)      *G06F 3/0481* (2013.01)

(21) Application number: **14306846.8**

(22) Date of filing: **20.11.2014**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **Thomson Licensing
92130 Issy-les-Moulineaux (FR)**

(72) Inventors:
• **Blonde, Laurent
35576 Cesson Sevigne (FR)**

• **Drazic, Valter
35576 Cesson Sevigne (FR)**
• **Schubert, Arno
35576 Ceson Sevigne (FR)**

(74) Representative: **Huchet, Anne
Technicolor
1, rue Jeanne d'Arc
92443 Issy-les-Moulineaux Cedex (FR)**

(54) **Device and method for processing visual data, and related computer program product**

(57)     The disclosure relates to a visual data processing device and a visual data processing method. The device is used for displaying visual data for a terminal. The device comprises:
- a module configured to obtaining (11) a three-dimensional position of the terminal with respect to a reference point on a user of the terminal;
- a module configured to determining (12), in relation to said three-dimensional position of the terminal, a subset of three-dimensional visual data to be displayed from the point of view of the reference point, in function of a set of available visual data;
- a module configured to modifying (13) said subset of three-dimensional visual data to be displayed, delivering modified visual data;
- a module configured to displaying (14), on a displaying module of the terminal, the modified visual data.

Head Coordinate system
$(O_H M_{xH} M_{yH} M_{zH})$

Device Coordinate system
$(O_D M_{xD} M_{yD} M_{zD})$

Torso Coordinate system
$(O_T M_{xT} M_{yT} M_{zT})$

Figure 2

EP 3 023 863 A1

**Description**

**1. Domain**

The disclosure relates to the field of data processing. More specifically, the disclosure relates to processing visual data to a position in space referenced to a coordinates system centred on the user (egocentric coordinates system).

**2. Prior Art Solutions**

With the rapid development of information technology, electronic visual display devices are widely used in the world. According to a mode of observation, display devices can be divided into two categories: direct view display and projection display. The handheld devices, smartphones and tablets can be considered as direct view display devices, since the visual contents can be directly viewed on their screens. Naturally, the projectors belong to the projection display device since the visual contents are projected to an external screen. Some head-mounted display devices (HMD) such as video glasses that project directly the visual contents onto the user's retina, may also be regarded as projection display device.

Today, the basic way to present visual contents on display devices is to reference the visual content from the point of view of the device. In other words, the visual contents displayed by the devices are independent of the position of the user.

For handheld devices, although the user can wipe to the left or to the right the displayed contents, the reference system remains the device itself. A case where the reference is not the device is photo or video acquisition, or some augmented reality-tags based applications where the data position is linked to the filmed environment. Holding the device in an adequate position may let the data appear in correspondence with the environment (with directions of the displayed data linked to directions in the environment as seen by the user). This is usually named augmented reality.

For HMD, a video may be projected onto the users' retina so that it appears at a given distance in front of the viewer. Optical parameters of the device will project the pictures so that accommodation and potentially convergence are comfortable for a viewer. Augmented reality techniques can link the data to directions in space centered on the user (for example cyclopean or stereo viewing).

However, the augmented reality techniques for handheld devices or HMD can only display a live view of a physical, real-world environment with "augmented" elements. The main visual contents are limited to real-word environment that is directly captured by a camera. In other words, handheld devices or HMD can only passively display the view of physical environment captured by its camera and add content over this physical environment

There a need for having a device and a method in which the data which are displayed are representative of the perception system of the user.

**3. Summary**

The disclosure overcomes the limitations of the prior art.

More specifically, the disclosure relates to a visual data processing device for displaying visual data for a terminal. According to the disclosure, the device comprises:

- a module configured to obtain a three-dimensional position of said terminal with respect to a reference point on a user of said terminal;
- a module configured to determine, in relation to said three-dimensional position of said terminal, a subset of visual data to be displayed from the point of view of said reference point, in function of a set of available visual data;
- a module configured to modify said subset of visual data to be displayed, delivering modified visual data;
- a module configured to display, on a displaying module of said terminal, said modified visual data.

Thus the present disclosure provides a visual data processing device that can compute or generate egocentric visual data to a user, using existing base visual data, in view of the position of the device compared to position of the user.

According to the disclosure, said reference point is on the torso of said user.

It is thus possible to determine the position of the device with a reference point which is constant.

According to the disclosure, said set of available visual data comprises at least one of the following elements:

- a desktop of an operation system;
- an icon of an application;
- a user-interfaces of an application;
- a video content.

Unlike augmented reality, the device displays data of applications or the like in view of the position of the device. Data which is shown is not representative of what is perceived by the device regarding capture module, but it is representative of piece of a kind of virtual environment.

According to the disclosure, said module for determining a subset visual data to be displayed in three-dimensional space comprises:

- a module configured to obtain data representative of at least one geometric transformation;
- a module configured to apply said at least one geometric transformation to said subset of visual data to be displayed.

According to the disclosure, said at least one geometric transformation comprises one 3D space rotation and one 3D translation.

Thus, the computation of visual data can be based on these two simple transformations, and the computation is fast.

According to the disclosure, a module configured to obtain a three-dimensional position comprises a position sensor.

According to the disclosure, said position sensor measures said three-dimensional position in function of at least one item mounted on said reference point on a user.

Thus, when the reference point is the torso, the item may foe example be a necklace. The necklace may be a digital one, sending its position to the device or a simple metallic necklace (the device then measure its position by detecting the necklace).

According to the disclosure, said terminal is a handheld device or a head mounted device (HMD).

The disclosure also relates to a method for processing visual data to be restored on a restitution module of a terminal. According to the disclosure, said method comprises:

- obtaining a three-dimensional position of said terminal with respect to a reference point on a user of said terminal;
- determining, in relation to said three-dimensional position of said terminal, a subset of three-dimensional visual data to be displayed from the point of view of said reference point, in function of a set of available visual data;
- modifying said subset of three-dimensional visual data to be displayed, delivering modified visual data;
- displaying, on said displaying module of said terminal, said modified visual data.

According to the disclosure, said reference point is on the torso of said user.

According to the disclosure, said set of available visual data comprises at least one of the following elements:

- a desktop of an operation system;
- an icons of an application;
- a user-interfaces of an application;
- a video content.

According to the disclosure, said determining step comprises:

- obtaining data representative of at least one geometric transformation;
- applying said at least one geometric transformation to said subset of visual data to be displayed.

According to the disclosure, said at least one geometric transformation comprises one 3D space rotation and one 3D translation.

Furthermore, the present disclosure extends the limited field of view of display device to a user's potential field of view, and provides a view/interaction paradigm where the presented content is not linked to the device but linked to the user. More precisely the content which is displayed is representative of the perception of the space of the user in its own egocentric coordinate system.

Accordingly, the present principles also provides a program which can be executed by a computer or a data processor, the program including instructions for controlling the execution of the steps of a method as mentioned above.

This program can use any programming language, and be in the form of source code, object code or intermediate code between source code and object code, such as a partially compiled form, or in any other desirable form.

The present principles also provide a medium readable by a data processor, and containing instructions of a program as mentioned above.

The information carrier may be any entity or device capable of storing the program. For example, the medium may comprise a storage medium, such as a ROM, for example a CD ROM or a microelectronic circuit, or a magnetic recording medium, such as a diskette (floppy disk) or a hard drive.

On the other hand, the information carrier may be a transmissible carrier such as an electrical or optical signal which may be conveyed via electrical or optical cable, by radio or by other means. The program according to the present principles may in particular be downloaded over a network such as the Internet.

Alternatively, the information carrier may be an integrated circuit in which the program is incorporated, the circuit being adapted to perform or to be used in carrying out the process in question.

According to one embodiment, the present principles are implemented using software and / or hardware. In this context, the term "module" can correspond in this document as well as a software component to a hardware component or a set of hardware and software components.

A software component is one or more computer programs, one or more sub-programs of a program, or more generally to any element of a program or software capable to implement a function or set of functions, according to what is described below for the module. Such software component is executed by a processor of a physical entity (TV, projector, terminal, server, gateway, router, etc.) and is likely to access the hardware resources of the physical entity (memory, storage media, bus communication, e-cards I / O, user interfaces, etc.).

Similarly, a hardware component is any component of a hardware (or hardware) that can implement a function or set of functions, according to what is described below for the module. It may be a component integrated with programmable hardware or software for the execution processor, for example an integrated circuit, a smart card, a memory card, an electronic card for the execution of a firmware, etc.

Each component of the system described above provides its own software modules. The various embodiments described above can be combined together for the implementation according to the present principles.

### 4. Drawings

The proposed method is described in the following by way of examples in connection with the accompanying figures without limiting the scope of the protection as defined by the claim. In the figures:

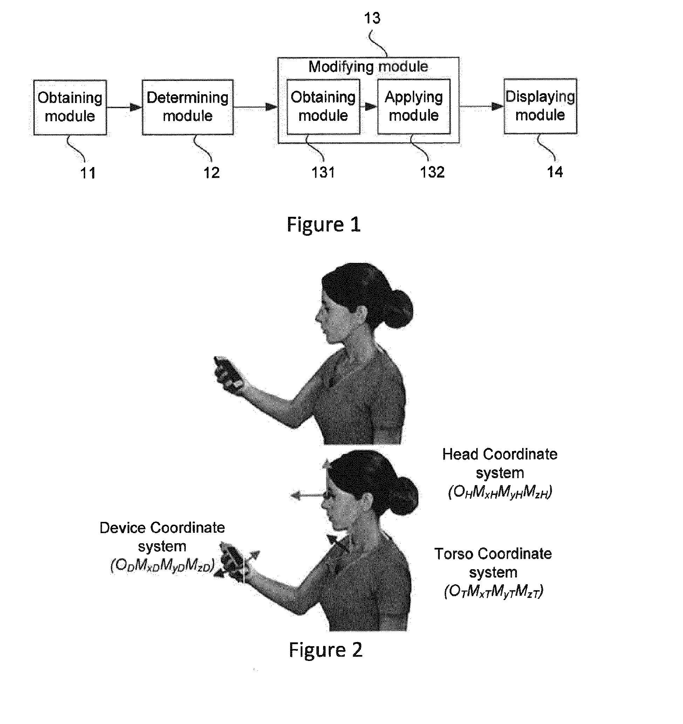

- figure 1 illustrates the main functional modules of the device;
- figure 2 illustrates the definition of Coordinate Systems;
- figure 3 illustrate an example of locating position sensor;
- figure 4 illustrate an egocentric content sphere centered on point C in a torso coordinate system;
- figure 5 illustrates a spherical coordinates centered on point C;
- figure 6 illustrates the main step of the visual data processing method;
- figure 7 illustrates an embodiment of a visual data processing device according to the disclosure.

### 5. Description of Embodiments

#### 5.1 Principles

In natural life, users are used to having objects or screens around them, and if they do not look at them at a given instant they know that if they modify their position/posture, they can look at these objects (as for example a TV set or a clock on a wall). Their perception of space is active, resulting from past and present visual and motor information. This is valid for their environmental (allocentric) space perception as well as for their egocentric space perception.

This disclosure improves the structure of visual information displayed by handheld or eyewear devices so that information is easily available in their egocentric and proximal space in order to organize or use applications or view content. This allows naturalness of interaction and improvement of efficiency in accessing applications replacing the classic 'desktop' paradigm of application icons and windows linked to a display surface.

One example embodiment allows exploiting the directions over the shoulder (e.g. to the right of a person) to permanently 'store' application icons or running applications. Turning the head (or moving a handheld screen) to the right (in the body/egocentric coordinate system) will bring an application 'stored' over the shoulder in view for the user. This could be a simple clock, a Skype window showing a remote person/location, an email icon, a side window related to the main content of interest (e.g. a map in a game). This content over the shoulder is not seen when the users are looking in front of them providing a free field of view where the natural live viewing or the main applications of interest are running. However, the users know that the application or icon above their shoulder is available and that turning the head (or moving a handheld screen) is sufficient to see it. The application is felt present besides them, as a companion application. Thus visual data (i.e. data which is shown to the user, for example icon, windows, desktop, etc.) is adapted to the position of the user.

The example paragraph above is valid for video glasses where tracking the users' body position relative to the eyewear may be sufficient to realize the effect. For a smartphone or tablet, moving the device in the direction over the shoulder and watching it can create a same effect if sensors are exploited. In both cases, updating the content relative to the user is the way to make the application icons or application content look stable in the users' egocentric environment.

It is thus provided a method and a device for computing or generating egocentric visual data to a user, using existing base visual data. The existing base visual data may for example be representative of a desktop of an operating system. The existing base visual data may for example be representative of an application which is executed on the device. It is important to note that the existing visual data is not the same than data which comes over an existing real object in an augmented reality system. The existing visual data does not add information to what the user see in real life. According to the disclosure, the aforementioned need is solved by a visual data processing device for displaying visual data for a terminal, comprising:

- a module configured to obtain, referenced 11, a three-dimensional position of the terminal with respect to a reference point on a user of the terminal;
- a module configured to determine, referenced 12, in relation to the three-dimensional position of the terminal, a subset of three-dimensional visual data to be displayed from the point of view of the reference point, as a function of a set of available visual data;
- a module configured to modify, referenced 13, the subset of three-dimensional visual data to be displayed, delivering modified visual data;
- a module configured to display, referenced 14, on the restitution module of the terminal, the modified visual data.

The module for obtaining 11 a three-dimensional position can capture or estimate a three-dimensional position of the terminal (display device) with respect to a reference point on the body of a user in an egocentric coordinates system of the user. The egocentric coordinates system is a coordinates system centred on the observer (user). The three-dimensional position represents two pieces of information: one is the distance between the reference point; the other is the direction from the reference portion to the device.

The module for obtaining 11 a three-dimensional position can be any motion capture devices, such as wearable sensors with dedicated processing capacity for body motion and activity recognition.

The module for determining 12 a subset of three-dimensional visual data to be displayed can select a subset of visual data to be displayed from a set of available visual data, according to the three-dimensional position of the terminal with respect to the reference point. The available visual data can be some existing images stored in a storage device or received from a network. Therefore, the visual data to be displayed can be changed when the terminal moves relative to the reference point on the user.

The module for modifying 13 the subset of three-dimensional visual data can compute a two-dimensional visual data (or a three-dimensional visual data) based on the subset of visual data egocentric visual data. The two-dimensional visual data or the three-dimensional visual data are the called modified visual data. The modification comprises for example, rearranging, reshaping, and/or resizing the subset of visual data.

According to an embodiment, the reference point is on the torso of the user. The torso is a good portion for the reference point compared with the head. When a user manipulates a handheld display device (terminal) incorporating the processing device of the disclosure, his head may move following the movement of the handheld device, the three-dimensional position of the device with respect to the head can be unchanged. For HMD, its relative position to the head is fixed. The displayed visual content may remain the unchanged. For both handheld display device and HDM, their positions with respect to the torso of a user change with their movements. The data processing device can therefore compute new egocentric visual data.

According to another embodiment, available visual data comprise at least one of the following elements:

- a desktop of an operation system;
- an icon of an application; and
- a user-interface of an application.

Thus the view field of the desktop is extended to the user's potential field of view. The desktop of the operation system or the user-interface of an application is enlarged. Besides, the navigation on the desktop or user-interface becomes easier and more efficient.

According to another embodiment, the module for determining further comprises:

- a module configured to obtain, referenced 131, data representative of at least one geometric transformation;
- a module configured to apply, referenced 132, the at least one geometric transformation to the subset of visual data to be displayed.

A geometric transform is performed to the subset of visual data. The transformed base visual data becomes egocentric visual data for the user.

According to another embodiment, the at least one geometric transform matrix comprise 3D space rotation and 3D translation parameters. Thus, the geometric transform matrix is modeled by a homogeneous transform for rigid objects combining only a 3D rotation and a 3D translation. According to another embodiment, the module for obtaining data representative of at least one geometric transformation comprises a position sensor, referenced 31, 32, 33. According to another embodiment, the position sensor 31 measures the three-dimensional position as a function of at least one item 32, 33 mounted on the reference point on the user. It is easier for the position sensor to detect a reference item. Thus, the item facilitates measurement of the relative position.

According to another embodiment, the aforementioned terminal is a handheld device or a head mounted device (HMD). Thus, the handheld devices or HMDs can display egocentric contents to users.

In another aspect, the disclosure provides a method for processing visual data to be restored on a restitution module of a terminal. The visual content represented by the restored visual data corresponds to the egocentric content of a user. The method comprises:

- Obtaining, referenced 61, a three-dimensional position of the terminal with respect to a reference point on a user of the terminal;
- determining, referenced 62, in relation to the three-dimensional position of the terminal, a subset of three-dimensional visual data to be displayed from the point of view of the reference point, in function of a set of available visual data;
- modifying, referenced 63, the subset of three-dimensional visual data to be displayed, delivering modified visual data;
- displaying, referenced 64, on the restitution module of the terminal, the modified visual data.

The step of obtaining 61 a three-dimensional position of the terminal can be realized by a position-capturing device incorporated in the terminal. The position-capturing device can capture or estimate the three-dimensional position of the terminal relative to a reference point on the user. The reference point can be situated on the head or the torso of the user.

The step of determining 62 a subset of three-dimensional visual data to be displayed can select the visual data to be displayed in the egocentric coordinate of the user. The step of modifying can be any type of manipulation to the subset of visual data. The step of modifying can compute egocentric visual data by modifying the determined subset of visual data. The step of displaying can display the two-dimensional egocentric data on the terminal.

According to another embodiment, the set of available visual data comprises at least one of the following elements:

- a desktop of an operation system;
- an icons of an application; and
- a user-interfaces of an application.

According to another embodiment, the determining step comprises:

- obtaining, referenced 631, data representative of at least one geometric transformation;
- applying, referenced 632, the at least one geometric transformation to the subset of visual data to be displayed.

According to another embodiment, the at least one geometric transformation comprises one 3D space rotation and one 3D translation.

In another aspect, the disclosure provides a computer program product downloadable from a communications network and/or stored in a computer-readable carrier and/or executable by a microprocessor, characterized in that it comprises program code instructions for the execution of the method for processing visual data according to any of the previous method for processing visual data, when it is executed on a computer.

5.2 Description of embodiments

In this embodiment, various solutions are described for processing the visual data. In these embodiments, visual data is an image to display. It is understood that this could be other kind of visual data without being out of the scope of the current disclosure. Also, in this embodiment, the display device is a portable display device such as a smartphone or a tablet.

A first set of variant briefly describes the way the visual data (image to display) is obtained in view of the position of a reference point of the user. Then, the first variant is described in detail.

More precisely, for processing the visual data, the first step is to obtain three-dimensional position of the terminal with respect to the torso of the user. Then visual data is processed by applying a set of geometric transformations to the position. These transformations, in this embodiment are matrices calculations (several matrices may be employed).

The following step is to modify the visual data in view of the position which has been transformed. The modification of the visual data may consist in identifying, in an available set of visual data (for example a large image), a subset of visual data to display (a smaller image). The last step is to transmit the visual data (the smaller image) to the displaying module of the terminal. Depending on the situation, a calibration method may also be employed for adapting the perception of the user to the displayed visual content. Content sharing and interaction between users is also disclosed.

### 5.2.1 Variants of the processing of visual data

The first variant of the embodiment consists in linking a displayed image coordinate system to the egocentric coordinate system of a user by:

1) obtaining (by capturing and/or estimating) the position in space (3D position) of a display device relative to the torso of a user.
(The result of the capture or estimation is a Geometric transform TD: $g_{TD}$ where D stands for *"Display"*, T stands for *"Torso")*
2) Computing an image on the display device of which coordinates and 2D distortion depend on:

i. a content intended to be displayed in directions relative to the user in his egocentric coordinate system (the "egocentric content"), which is, in this embodiment, an image;
ii. Geometric transform TD: $g_{TD}$, where D stands for *"Display"*, T stands for *"Torso";*

The second variant consists in linking a displayed image coordinate system to the egocentric coordinate system of a user by:

1) obtaining (by capturing and/or estimating) the position in space (3D position) of the head of a user relative to the body/torso of a user;
(The result of the capture or estimation is a Geometric transform TH: $g_{TH}$, where T stands for *"Torso"* and H for *"Head")*
2) obtaining (by capturing and/or estimating) the position in space (3D Position) of the display device relative to the head of a user;
(The result of the capture or estimation is a Geometric transform HD: $g_{HD}$, where D stands for *"Display"* and H for *"Head")*
3) Computing an image on the display device of which coordinates and 2D distortion depend on

i. A content intended to be displayed in directions relative to the user in his egocentric coordinate system (the "egocentric content"), which is, in this embodiment, an image;
ii. A combination of Geometric transform TH $g_{TH}$ and Geometric transform HD $g_{HD}$;

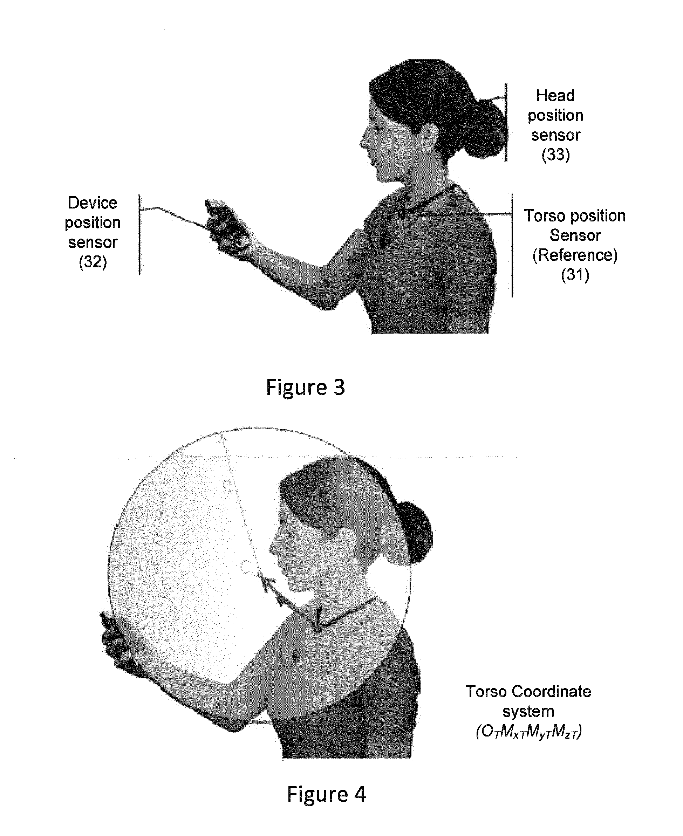

Compared with the first solution, the second one adds the knowledge of the head position, which modifies relative directions perception in some configurations like neck flexion (bending the neck forward).
A third solution may be necessary to account for body postures (e.g. head on a pillow, talking to a taller or smaller person) or for body motion (e.g. walking, running) affecting relative directions.
The reference coordinate system is the torso coordinate system ($O_T M_{xT} M_{yT} M_{zT}$) as e.g. shown in figure 3. The head and the display device coordinate systems are shown as well (the display coordinate system is ($O_D M_{xD} M_{yD} M_{zD}$). The user may wear position sensors in various forms attached to rigid parts of the torso or head and similar sensor may be embedded in the handheld or worn displays as shown in Figure 4.

### 5.2.2 Detailed explanations on the first variant

This example variant assumes that there is no distortion of the perceived egocentric space in the sense that $g_{TD}$ can be modelled by a combination of only a 3D rotation and a 3D translation. More generally by a homogeneous transform for rigid objects could be used including rotation translation, scaling, shear and perspective projection in 3D space. In the reference coordinate system (here the Torso coordinate system ($O_T M_{xT} M_{yT} M_{zT}$), the display device moves and rotates in a manner described by geometric transform $g_{TD}$ (3D rotation and a 3D translation in this example) and the position $X_D, Y_D, Z_D$ of a point in the coordinate system ($O_D M_{xD} M_{yD} M_{zD}$) linked to the display device is given by the following equations where $X_T, Y_T, Z_T$ are the coordinates of this same point in the reference coordinate system ($O_T M_{xT} M_{yT} M_{zT}$):

$$\begin{cases} X_D = r_{xxTD}.X_T + r_{xyTD}.Y_T + r_{xzTD}.Z_T + t_{xTD} \\ Y_D = r_{yxTD}.X_T + r_{yyTD}.Y_T + r_{yzTD}.Z_T + t_{yTD} \\ Z_D = r_{zxTD}.X_T + r_{zyTD}.Y_T + r_{zzTD}.Z_T + t_{zTD} \end{cases}$$

where : $\begin{bmatrix} r_{xx} & r_{xy} & r_{xz} \\ r_{yx} & r_{yy} & r_{yz} \\ r_{zx} & r_{zy} & r_{zz} \end{bmatrix}$ is a 3D space rotation matrix and $\begin{bmatrix} t_x \\ t_y \\ t_z \end{bmatrix}$ represents a translation.

The above $g_{TD}$ transform with parameters $\begin{bmatrix} r_{xx} & r_{xy} & r_{xz} \\ r_{yx} & r_{yy} & r_{yz} \\ r_{zx} & r_{zy} & r_{zz} \end{bmatrix}$ (3D space rotation matrix) and $\begin{bmatrix} t_x \\ t_y \\ t_z \end{bmatrix}$ (translation vector) allow the transfer of egocentric content from the egocentric coordinate system (Torso referred) to the display coordinate system.

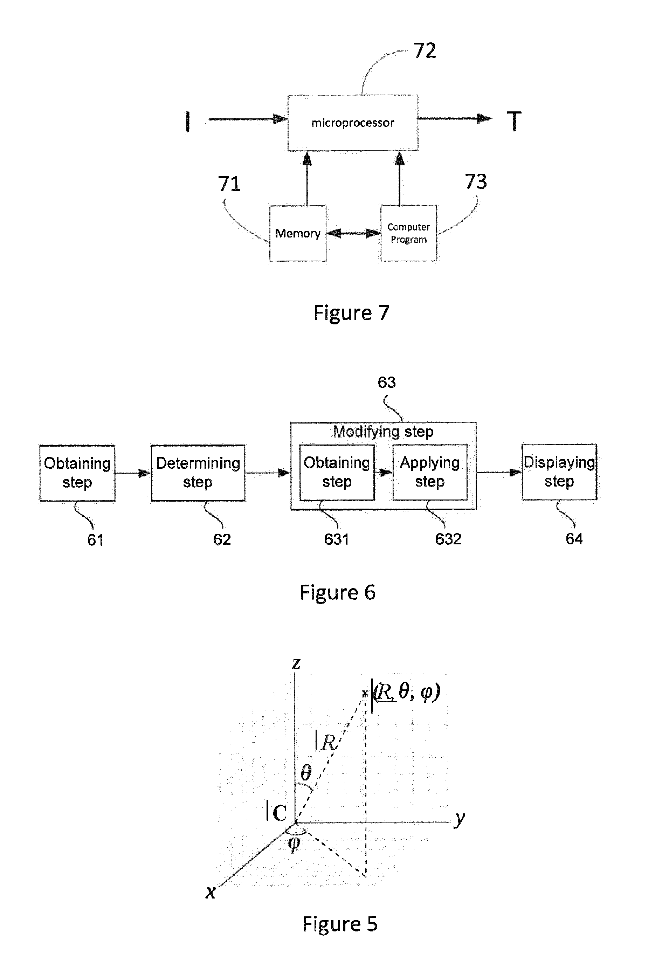

For the display device, the method of this embodiment consist in defining a sphere S (center C, radius R) as shown in Figure 5, onto which the egocentric content information is representable, for example by a pixel grid (an image) $I(\theta, \varphi)$ where each pixel is defined for a polar angle $\theta$ and an azimuthal angle $\varphi$ in the spherical coordinate system centered on point C itself of coordinates $(x_C, y_C, z_C)$ in the Torso coordinate system $(O_T M_{xT} M_{yT} M_{zT})$. The sphere S is defined inside the reachable workspace of the user with this device.

The above described sphere for a HMD (for example see-thru glasses) will have different characteristics as pointing/interaction is different, but the principle and formulation explained remain similar.

To compute the intensity or color of a display pixel P of coordinates (i,j), the position of this pixel in the Torso coordinate system is first computed, locating first the pixel in the Display coordinate and, second, applying the inverse transform $g_{DT} = (g_{TD})^{-1}$.

Then the spherical coordinates (centred on point C) of point P are computed by:

$$r_{P/C} = \sqrt{(x_P - x_C)^2 + (y_P - y_C)^2 + (z_P - z_C)^2}$$

$$\theta_{P/C} = \cos^{-1}\left(\frac{z_P - z_C}{\sqrt{(x_P - x_C)^2 + (y_P - y_C)^2 + (z_P - z_C)^2}}\right)$$

$$\varphi_{P/C} = \tan^{-1}\left(\frac{y_P - y_C}{x_P - x_C}\right)$$

and, for a handheld device case, if $r_{P/C} \cong R$ (e.g. $\left|\frac{r_{P/C} - R}{R}\right|$ ), the display pixel P is given the intensity or color of the egocentric content pixel at coordinates $(\theta_{P/C}, \varphi_{P/C})$.

$$P(i,j) = I(\theta_{P/C}, \varphi_{P/C})$$

A too large distance between the Pixel P and Sphere S (e.g. $\left(\frac{r_{P/C} - R}{R}\right| \geqslant 5\%$) shall not happen if sphere S is well defined relative to the user's workspace. However, in this case, a projection of pixel P onto sphere S should be performed in the direction of either the cyclopean eye or the left and right eye in case of single eye view or stereoscopy respectively. It should be noted that knowing head position in the Torso coordinates system is then necessary ($g_{TH}$ geometric transform).

### 5.2.3 Managing potential distortion of perceived space in the first variant

It is noted that the perception of directions in space is a complex visual and psychomotor task. Relating perceived directions and the egocentric content may in some cases be more complex than using as display surface a sphere located at a fixed position in space relative to the user. For example moving eyes or head may modify the perception of directions, not only with naked eyes but more certainly when wearing corrective glasses, as these deviate rays and so distort the relation between the object space and its projection on the retina.

To address potential distortion of perceived space, a solution is to keep the above spherical surface to represent the egocentric content but to apply a specific morphing (image morphing) in the $(\theta, \varphi)$ space where the egocentric content is defined.

The above equation: $P(i,j) = I(\theta_{P/C}, \varphi_{P/C})$

Then becomes: $P(i,j) = I(\theta', \varphi'))$, where $(\theta'_{P/C}, \varphi'_{P/C}) = Morph(\theta_{P/C}, \varphi_{P/C})$.

$(\theta', \varphi') = Morph(\theta, \varphi)$ is a morphing function taking into account non-linearities in the perception of directions. It can depend on head and body motion, and for example on the limit between the corrected and non-corrected field of view for a user wearing corrective glasses.

$(\theta', \varphi') = Morph(\theta, \varphi)$ can be represented by various mathematical formulae, including polynomial representations of various degrees, splines, or spherical harmonics. $(\theta', \varphi') = Morph(\theta, \varphi)$ can be calibrated by the methods presented below.

Furthermore, for managing potential distortion of perceived space, the following could also be taken into account:

- Some ancillary transforms can be used to take into account for e.g. the rigid translation from the torso sensor to the torso reference point, or to transform from the display coordinate system to the image coordinate system in pixels.
- Geometric transforms depend on time as following the users' movements.
- A field of view adjustment/scaling depending on corrective glasses power may be necessary.
- The Geometric transform HD: $g_{HD}$ can be estimated from image analysis if the handheld device has one or several front cameras) and a 3D head pose estimation function.

### 5.2.4 Calibration

Geometric transforms may in some cases require calibration and this calibration may be user dependent as each user will have a different perception of his relative (egocentric) directions. Several calibration methods can be used, as a function of the situation. The goal of the calibration is to obtain a set of geometric transform which fits the user. In the specific embodiment presented herein, the calibration aims at obtaining transformation matrices which are used later when processing the visual data to display.

Calibration method 1:

In this first calibration method, an egocentric content is displayed to the user with default geometric transforms generated for an average or standard user or assuming generic display geometry (e.g. a sphere). Then, the calibration process updates the geometric transforms TD or TH & HD according to user actions on dedicated widgets (sphere elongation, translation, rotation). The widget compares a perceived content of the user with an expected content and updates the content transforms accordingly.

Calibration method 2:

In this second calibration method, an egocentric content is displayed to the user with default geometric transforms generated for an average or standard user or assuming generic display geometry (e.g. a sphere). Then, the calibration process updates the geometric transforms TD or TH & HD according to user interactions in the normal usage of the system analysis, identifying errors of the display devices compared to the expected egocentric content geometry.

Calibration method 3:

In this third calibration method, a calibration of the relation between a displayed image coordinate system and the egocentric coordinate system of a user is done by the following steps:

1) Placing and moving a point of interest (e.g. a cross or a dot) as egocentric content on a displayed image;
2) Asking the user to visually (and for handheld devices manually) follow the point of interest (the user will have to modify his posture depending on the point of interest);
3) Capturing the users posture at several instants by:

a. Capturing the position of a coordinate system linked to a displayed image relative to a coordinate system linked to the body/torso of a user
(Geometric transform TD); or
Capturing the position of a coordinate system linked to a displayed image relative to a coordinate system linked to the head of the user.
(Geometric transform HD);
b. Capturing the position of the head coordinate system relative to a coordinate system linked to the body/torso of a user
(Geometric transform TH).

4) Calibrating the directions relative to the user (in his/her egocentric coordinate system) depending on the captured -image vs. body/torso- position or depending on the captured -image vs. head vs. body/torso- position:

a. Calibration can consist in determining a model generalizing the sampled posture captures (model fitting) and computing an inverse model

Stabilization of the subsequent displayed images in the egocentric coordinate system is then based on this calibration

5.2.5 Interaction

Manipulating the egocentric content is highly desirable, for example for the user to move an application stored 'over the shoulder' (e.g. a Skype application) to face him/her and to use it. Handheld devices can be by themselves pointing devices and touch functions can trigger e.g. a drag-drop action in the egocentric content environment. Also, wearable tracking devices, for example rigidly fixed on the back of the hand or in the form of a ring can allow designating or pointing at pieces of content in the egocentric environment. Hand tracking image analysis can as well be used if the user wears an egocentric camera (e.g. embedded in glasses).
Similar transforms as above can be used to identify the relation of the pointing device or hand/finger with the egocentric content, be it actually displayed or not on a display device. Vocal analysis or touch accessories may support the interaction, identifying the start and end of an action.
Interaction can as well consist in selecting a piece of content in the egocentric environment and sending it on an equipment e.g. an actual display (e.g. a TV screen or a monitor) in the allocentric environment (in the room), e.g. by pointing or by naming it. For this, characteristics (geometry, devices names and addresses) of the allocentric environment have to be known of the egocentric system.

5.2.6 Sharing

Egocentric content is by essence proper to a user U1 and initially user U1 is the only person viewing it. However some (maybe partial) rights may be given to another user U2 to see the egocentric content of user U1. User U2 can thus understand what user U1 is viewing/doing. User U2 can also potentially share/interact with this U1 egocentric content.
A solution for realizing this sharing function, is to link a displayed image coordinate system of user U2 to the egocentric coordinate system of a user U1 by:

1) obtaining (Capturing/Estimating) the position in space of the body/torso of user U2 relative to the body/torso of a user U1, (Geometric transform T1T2: $g_{T1T2}$);
2) obtaining (Capturing/Estimating) the position in space of a display device relative of user U2 to the body/torso of a user U2, (Geometric transform T2D2: $g\_{T2D2}$);
3) transferring the data and the geometry of (authorized parts of) user U1 "egocentric content" to user U2 system;
4) computing an image on the display device of user U2, image of which coordinates and 2D distortion depend on:

i. A content intended to be displayed in directions relative to the user U1 in his egocentric coordinate system (the "egocentric content"),
ii. Geometric transform T1T2: $g_{T1T2}$ and Geometric transform T1D2: $g_{T1D2}$;

With this solution of repurposing egocentric content of one user in the egocentric environment of another user, user U2 can see egocentric content of user U1 and potentially manipulate it.

When user U1 and user U2 share content they can have content shared linked to both egocentric environments, and for example, if they are sitting side by side, a common video position can be 'located' in space at a position dependent on both egocentric environments (both torso/head sensors). This solution scales to more than two users. A multiplicity of scenarios could be studied in this aspect of viewing common content using egocentric devices. 5.3 Related devices

**Figure 7** illustrates an embodiment of a visual data processing device according to the disclosure.

Such a device has a memory, referenced 71, consisting of a buffer memory, a processing unit, referenced 72, equipped for example with a microprocessor and driven by the computer program, referenced 73, implementing at least certain steps of the rendering method according to the disclosure.

At initialization, the code instructions of the computer program are for example loaded into a RAM and then executed by a processor of the processing unit. The processing unit inputs visual data, a three-dimensional position obtained by a module configured to obtain 11. The microprocessor of the processing unit 72 implements the steps of determining 62, modifying 63, and displaying 64 according to the instructions of the computer program 73, to determine and modify a subset of visual data to be displayed, and finally restore the visual data.

Therefore, the a module configured to determine 12 a subset of visual data, a module configured to modify 13 the set of visual data and a module configured to display 14 the visual data can all be realized by one processing unit 72 and memory 71 with corresponding computer programs 73.

In another implementation, the device is a dedicated device, comprising dedicated processing unit 72 and/or memory resource 71. In such case, the a module configured to determine (12) a subset of visual data, a module configured to modify (13) the set of visual data and a module configured to display (14) the visual data have respectively a dedicated microprocessor 72 and/or memory 71.

The device previously illustrated can be linked or integrated in a wide variety of display devices. Among these display types, the following can be cited:

- Handheld: the display may be a handheld display (smartphone or tablet). The user moves the display at arm length or closer to explore his/her egocentric environment. The "egocentric content" needs to be rendered onto the imaging surface of the display to appear static in the egocentric environment, as if viewed thru the smartphone or tablet frame. Content distortion and mapping to pixels will happen in this projection from the "egocentric content" surface to the imaging surface of the display.
- Glasses: the display may consist of video glasses projecting a virtual image in front of the user. The user moves his head to explore his/her egocentric environment. The "egocentric content" needs to be projected onto the virtual image plane of the glasses to appear static in the egocentric environment. Content distortion and mapping to pixels will happen in this projection from the "egocentric content" surface to the virtual image.
- Stereoscopy: In case of stereoscopic display, the projection needs to be done independently for each eye. For non-stereoscopic displays, the cyclopean eye coordinates (eyes mid-point) may be used as the common coordinate of both eyes.

5.4 Computer program

The disclosure provides a computer program product downloadable from a communications network and/or stored in a computer-readable carrier and/or executable by a microprocessor. The program product comprises program code instructions for the execution of the method for processing visual data according to any of the previous method for processing visual data, when it is executed on a computer.

**Claims**

1. Visual data processing device for displaying visual data for a terminal, **characterized in that** it comprises:

    - a module configured to obtain (11) a three-dimensional position of said terminal with respect to a reference point on a user of said terminal;
    - a module configured to determine (12), in relation to said three-dimensional position of said terminal, a subset of visual data to be displayed from the point of view of said reference point, as a function of a set of available visual data;
    - a module configured to modify (13) said subset of visual data to be displayed, delivering modified visual data;
    - a module configured to display (14), on a displaying module of said terminal, said modified visual data.

**2.** Visual data processing device according to claim 1, **characterized in that** said reference point is on the torso of said user.

**3.** Visual data processing device according to claim 1, **characterized in that** said set of available visual data comprises at least one of the following elements:

- a desktop of an operation system;
- an icon of an application;
- a user-interfaces of an application;
- a video content.

**4.** Visual data processing device according to claim 1, **characterized in that** said module for determining a subset of visual data to be displayed comprises:

- a module configured to obtain (131) at least one piece of data representative of at least one geometric transformation;
- a module configured to apply (132) said at least one geometric transformation to said subset of visual data to be displayed.

**5.** Visual data processing device according to claim 4, **characterized in that** said at least one geometric transformation comprises one 3D space rotation and one 3D translation.

**6.** Visual data processing device according to claim 1, **characterized in that** said module configured to obtain a three-dimensional position comprises a position sensor (31, 32, 33).

**7.** Visual data processing device according to claim 6, **characterized in that** said position sensor measures said three-dimensional position as a function of at least one item (32, 33) positioned on said reference point on a user.

**8.** The device according to any one of claims 1 to 7, **characterized in that** said terminal is a handheld device or a head mounted device (HMD).

**9.** Method for processing visual data to be restored on a restitution module of a terminal, **characterized in that** it comprises:

- obtaining (61) a three-dimensional position of said terminal with respect to a reference point on a user of said terminal;
- determining (62), in relation to said three-dimensional position of said terminal, a subset of three-dimensional visual data to be displayed from the point of view of said reference point, as a function of a set of available visual data;
- modifying (63) said subset of three-dimensional visual data to be displayed, delivering modified visual data;
- displaying (64), on said displaying module of said terminal, said modified visual data.

**10.** Method according to claim 9, **characterized in that** said reference point is on the torso of said user.

**11.** The method according to claim 9, **characterized in that** said set of available visual data comprises at least one of the following elements:

- a desktop of an operation system;
- an icons of an application;
- a user-interfaces of an application;
- a video content.

**12.** Method according to claim 9, **characterized in that** said determining step comprises:

- obtaining (631) data representative of at least one geometric transformation;
- applying (632) said at least one geometric transformation to said subset of visual data to be displayed.

**13.** Method according to claim 12, **characterized in that** said at least one geometric transformation comprises one 3D space rotation and one 3D translation.

14. Computer program product downloadable from a communications network and/or stored in a computer-readable carrier and/or executable by a microprocessor, **characterized in that** it comprises program code instructions for the execution of the method for processing visual data according to at least one of the claims 9 to 13, when it is executed on a computer.

Figure 1

Figure 2

Head
position
sensor
(33)

Device
position
sensor
(32)

Torso position
Sensor
(Reference)
(31)

Figure 3

Torso Coordinate
system
$(O_T M_{xT} M_{yT} M_{zT})$

Figure 4

Figure 7

Figure 6

Figure 5

Europäisches
Patentamt

European
Patent Office

Office européen
des brevets

# EUROPEAN SEARCH REPORT

Application Number

EP 14 30 6846

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2009/313584 A1 (KERR DUNCAN R [US] ET AL) 17 December 2009 (2009-12-17) * paragraphs [0004] - [0006], [0034] - [0036], [0041] - [0044], [0047], [0064], [0085], [0086] * * figures 1,2,5-23 * | 1-14 | INV. G06F3/01 G06F3/0481 |
| X | US 2013/007668 A1 (LIU JAMES CHIA-MING [US] ET AL) 3 January 2013 (2013-01-03) * paragraphs [0003], [0023], [0034] - [0038], [0043] - [0048], [0069] * * figures 1,2A, 2X * | 1-14 | |
| X | WO 2014/008185 A1 (SONY COMP ENTERTAINMENT INC [JP]; NAKAYAMA RYUJI [US]) 9 January 2014 (2014-01-09) * paragraphs [0063], [0087], [0093] - [0095], [0104] * * figures 5-7,13,16 * | 1,3,6,8, 9,11,14 | |
| A | US 2012/314899 A1 (COHEN MICHAEL F [US] ET AL) 13 December 2012 (2012-12-13) * the whole document * | 1-14 | TECHNICAL FIELDS SEARCHED (IPC)  G06F |
| A | US 2012/212405 A1 (NEWHOUSE BENJAMIN ZEIS [US] ET AL) 23 August 2012 (2012-08-23) * the whole document * | 1-14 | |

The present search report has been drawn up for all claims

| Place of search | Date of completion of the search | Examiner |
|---|---|---|
| Munich | 7 May 2015 | Benzina, Amal |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 14 30 6846

This annex lists the patent family members relating to the patent documents cited in the above-mentioned European search report.
The members are as contained in the European Patent Office EDP file on
The European Patent Office is in no way liable for these particulars which are merely given for the purpose of information.

07-05-2015

| Patent document cited in search report | | Publication date | Patent family member(s) | | Publication date |
|---|---|---|---|---|---|
| US 2009313584 | A1 | 17-12-2009 | US<br>WO | 2009313584 A1<br>2009154837 A1 | 17-12-2009<br>23-12-2009 |
| US 2013007668 | A1 | 03-01-2013 | US<br>WO | 2013007668 A1<br>2013006518 A2 | 03-01-2013<br>10-01-2013 |
| WO 2014008185 | A1 | 09-01-2014 | US<br>US<br>WO | 2014002351 A1<br>2015015487 A1<br>2014008185 A1 | 02-01-2014<br>15-01-2015<br>09-01-2014 |
| US 2012314899 | A1 | 13-12-2012 | US<br>US | 2012314899 A1<br>2015002393 A1 | 13-12-2012<br>01-01-2015 |
| US 2012212405 | A1 | 23-08-2012 | NONE | | |

EPO FORM P0459

For more details about this annex : see Official Journal of the European Patent Office, No. 12/82